# EUROPÄISCHE PATENTSCHRIFT

(11) **EP 2 302 190 B1**
(45) Veröffentlichungstag und Bekanntmachung des Hinweises auf die Patenterteilung: **25.12.2013**
(21) Anmeldenummer: 09290726.0
(22) Anmeldetag: 25.09.2009
(51) Int. Cl.: F02M 25/07

(54) **Abgasrückführsystem**
Exhaust gas recycling system
Système de refoulement des gaz d'échappement

(43) Veröffentlichungstag der Anmeldung: 30.03.2011
(73) Patentinhaber: Behr GmbH & Co. KG, 70469 Stuttgart (DE)
(72) Erfinder: Genoist, Jérome, 78370 Plaisir (FR); Steurer, Hans-Ulrich, Dipl.-Ing., 70376 Stuttgart (DE); Pantow, Eberhard, Dr.-Ing., 71364 Winnenden (DE)
(74) Vertreter: Grauel, Andreas

(56) Entgegenhaltungen:
- EP-A1- 1 405 995
- EP-A1- 2 025 912
- EP-A2- 0 913 561
- FR-A1- 2 892 770

## Beschreibung

Die Erfindung betrifft ein Abgasrückführsystem mit einer Brennkraftmaschine, der an einer Entnahmestelle abgezweigtes und über eine Rückführstelle zurückgeführtes Abgas zugeführt wird, mit einem zwischen der Entnahmestelle und der Rückführstelle angeordneten Wärmetauscher für das zurückgeführte Abgas, und mit einem Abgasrückführventil, über das die zurückgeführte Abgasmenge regelbar ist.

Aus der Übersetzung DE 698 17 294 T2 der europäischen Patentschrift EP 0 913 561 B1 ist eine Abgasrückführleitung mit einem Wärmetauscher bekannt, der zwischen einem Motor und einem Katalysatortopf in Reihe mit Verengungsmitteln zur Erzeugung eines Gegendrucks angeordnet ist, wobei der Wärmetauscherstrom aufwärts von den Verengungsmitteln liegt. In der Abgasrückführleitung ist dem Wärmetauscher ein Abgasrückführventil nachgeschaltet. Eine Drosselplatte ist parallel zu dem Wärmetauscher geschaltet. Aus der deutschen Veröffentlichung DE 103 92 766 T5 ist eine Abgasleitung für einen Brennkraftmotor mit einer Zirkulationsleitung bekannt, die direkt oder indirekt an einen Abgaskanal angeschlossen ist, um einen Teil der Abgase zurückzuleiten. Zum Kühlen des zurückgeleiteten Teils der Abgase ist ein Wärmetauscher zwischen einen Abgaskatalysatortopf und ein Katalyseelement geschaltet. Aus der deutschen Offenlegungsschrift DE 102 59 702 A1 ist ein Abgassystem für einen Wärmemotor mit einem Abwärmerückgewinnungsbereich zur Rückgewinnung von Wärme aus dem Abgas und zur Übertragung der rückgewonnenen Wärme an ein Wärmemedium bekannt, der in der Abgasleitung angeordnet ist. Zur Verbrennung von Kraftstoff ist in der Abgasleitung ein Verbrenner vorgesehen, der auch als Combuster bezeichnet wird.

Die EP 1 405 995 A1 offenbart ein Motorsystem mit Abgaskurbolader, bei welchem ein Wärmetauscher zur Kühlung des rückgeführten Abgases vorgesehen ist.

Aufgabe der Erfindung ist es, ein Abgasrückführsystem gemäß dem Oberbegriff des Anspruchs 1 zu schaffen, das einfach aufgebaut und kostengünstig herstellbar ist.

Die Aufgabe ist bei einem Abgasrückführsystem mit einer Brennkraftmaschine, der an einer Entnahmestelle abgezweigtes und über eine Rückführstelle zurückgeführtes Abgas zugeführt wird, mit einem zwischen der Entnahmestelle und der Rückführstelle angeordneten Wärmetauscher für das zurückgeführte Abgas, und mit einem Abgasrückführventil, über das die zurückgeführte Abgasmenge regelbar ist, wobei das Abgasrückführventil zwischen die Entnahmestelle und den Wärmetauscher geschaltet ist, dadurch gelöst, dass dem Wärmetauscher ein Abzweigventil zugeordnet ist, über welches das an der Entnahmestelle abgezweigte und aus dem Wärmetauscher austretende Abgas über die Rückführstelle zurückgeführt oder über eine Abzweigleitung abgeführt wird, wobei der Wärmetauscher in entgegengesetzten Richtungen von dem an der Entnahmestelle abgezweigten Abgas durchströmbar beziehungsweise durchströmt ist.

Ein bevorzugtes Ausführungsbeispiel des Abgasrückführsystems ist dadurch gekennzeichnet, dass dem Wärmetauscher ein Abzweigventil zugeordnet ist, über welches das an der Entnahmestelle abgezweigte und aus dem Wärmetauscher austretende Abgas über die Rückführstelle zurückgeführt oder über eine Abzweigleitung abgeführt wird. Über das Abzweigventil kann das an der Entnahmestelle abgezweigte Abgas, zumindest teilweise, zusammen mit dem nicht an der Entnahmestelle abgezweigten Abgas über eine Auspuffanlage, die gegebenenfalls eine Katalysatoreinrichtung umfasst, in die Umgebung abgeführt werden.

Ein weiteres bevorzugtes Ausführungsbeispiel des Abgasrückführsystems ist dadurch gekennzeichnet, dass das an der Entnahmestelle abgezweigte und aus dem Wärmetauscher austretende Abgas durch das Abzweigventil ganz oder teilweise über die Rückführstelle zurückgeführt beziehungsweise über die Abzweigleitung abgeführt wird. Der Wärmetauscher kann zum einen in einer Aufwärmphase der Brennkraftmaschine dazu verwendet werden, das an der Entnahmestelle abgezweigte Abgas zur Wärmerückgewinnung zu kühlen. Darüber hinaus kann der Wärmetauscher dazu verwendet werden, das an der Rückführstelle zurückgeführte Abgas zu kühlen, um Wärme zurückzugewinnen.

Ein weiteres bevorzugtes Ausführungsbeispiel des Abgasrückführsystems ist dadurch gekennzeichnet, dass das Abzweigventil in den Wärmetauscher integriert ist. Alternativ oder zusätzlich kann das Abgasrückführventil in den Wärmetauscher integriert sein.

Ein weiteres bevorzugtes Ausführungsbeispiel des Abgasrückführsystems ist dadurch gekennzeichnet, dass das Abzweigventil an einem Ausgang des Wärmetauschers vorgesehen ist. Dadurch wird auf einfache Art und Weise erreicht, dass das gesamte an der Entnahmestelle abgezweigte Abgas zunächst einem Wärmetausch unterzogen wird.

Ein weiteres bevorzugtes Ausführungsbeispiel des Abgasrückführsystems ist dadurch gekennzeichnet, dass der Wärmetauscher nur in einer Richtung von dem an der Entnahmestelle abgezweigten Abgas durchströmbar beziehungsweise durchströmt ist. Ein derartiger Wärmetauscher wird auch als I-Flow-Wärmetauscher bezeichnet.

Ein weiteres bevorzugtes Ausführungsbeispiel des Abgasrückführsystems ist dadurch gekennzeichnet, dass die Abzweigleitung und eine Rückführleitung an ein Ende des Wärmetauschers angeschlossen sind. Das andere von zwei Enden des Wärmetauschers steht vorzugsweise mit der Entnahmestelle für das Abgas in Verbindung.

Ein weiteres bevorzugtes Ausführungsbeispiel des Abgasrückführsystems ist dadurch gekennzeichnet, dass der Wärmetauscher in entgegengesetzten Richtungen von dem an der Entnahmestelle abgezweigten Abgas durchströmbar beziehungsweise durchströmt ist. Ein derartiger Wärmetauscher wird auch als U-Flow-Wärmetauscher bezeichnet.

Ein weiteres bevorzugtes Ausführungsbeispiel des Abgasrückführsystems ist dadurch gekennzeichnet, dass die Abzweigleitung an ein Ende des Wärmetauschers angeschlossen ist, das mit der Entnahmestelle für das Abgas in Verbindung steht. Dadurch wird erreicht, dass das an der Entnahmestelle abgezweigte Abgas, das nicht an der Rückführstelle zurückgeführt wird, den Wärmetauscher mehrfach durchströmt. Dadurch kann die Wärmerückgewinnung weiter verbessert werden.

Ein weiteres bevorzugtes Ausführungsbeispiel des Abgasrückführsystems ist dadurch gekennzeichnet, dass an das andere von zwei Enden des Wärmetauschers eine Rückführleitung angeschlossen ist. In der Rückführleitung kann ein Filter angeordnet sein.

Ein weiteres bevorzugtes Ausführungsbeispiel des Abgasrückführsystems ist dadurch gekennzeichnet, dass der Entnahmestelle ein Gegendruckventil nachgeschaltet ist. Das Gegendruckventil dient dazu, an der Entnahmestelle einen Gegendruck aufzubauen. Dadurch kann die Temperatur des Abgases erhöht und die Wärmerückgewinnung verbessert werden.

Ein weiteres bevorzugtes Ausführungsbeispiel des Abgasrückführsystems ist dadurch gekennzeichnet, dass zwischen der Brennkraftmaschine und der Entnahmestelle eine weitere Entnahmestelle vorgesehen ist, die über ein weiteres Abgasrückführventil mit einer weiteren Rückführstelle verbindbar ist, die zwischen der Rückführstelle und der Brennkraftmaschine vorgesehen ist. Dadurch wird auf einfache Art und Weise eine ungekühlte Rückführung von Abgas ermöglicht.

Ein weiteres bevorzugtes Ausführungsbeispiel des Abgasrückführsystems ist dadurch gekennzeichnet, dass zwischen der Rückführstelle und der Brennkraftmaschine ein Verdichter für das Abgas vorgesehen ist, der durch eine Turbine angetrieben ist, die zwischen der Brennkraftmaschine und der Entnahmestelle vorgesehen ist. Die weitere Entnahmestelle ist vorzugsweise zwischen der Brennkraftmaschine und der Turbine vorgesehen. Die weitere Rückführstelle ist vorzugsweise zwischen dem Verdichter und der Brennkraftmaschine vorgesehen.
Ein weiteres bevorzugtes Ausführungsbeispiel des Abgasrückführsystems ist **dadurch gekennzeichnet, dass** ein Ladeluftkühler zwischen den Verdichter und die Brennkraftmaschine geschaltet ist. Die weitere Rückführstelle ist vorzugsweise zwischen dem Ladeluftkühler und der Brennkraftmaschine vorgesehen.

Ein weiteres bevorzugtes Ausführungsbeispiel des Abgasrückführsystems ist **dadurch gekennzeichnet, dass** der Turbine ein Dieselpartikelfilter nachgeschaltet ist. Der Dieselpartikelfilter ist vorzugsweise zwischen die Turbine und die Entnahmestelle geschaltet.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine vereinfachte Darstellung eines erfindungsgemäßen Abgas- rückführsystems mit einer Brennkraftmaschine und einem Wärme- tauscher;
- Figur 2: den Wärmetauscher aus Figur 1 in einer 1-Flow-Ausführung in ei- nem Abgasrückführmodus;
- Figur 3: den Wärmetauscher aus Figur 2 in einem Wärmerückgewin- nungsmodus;
- Figur 4: den Wärmetauscher aus Figur 1 in einer U-Flow-Ausführung im Wärmerückgewinnungsmodus und
- Figur 5: den Wärmetauscher aus Figur 4 im Abgasrückführmodus.

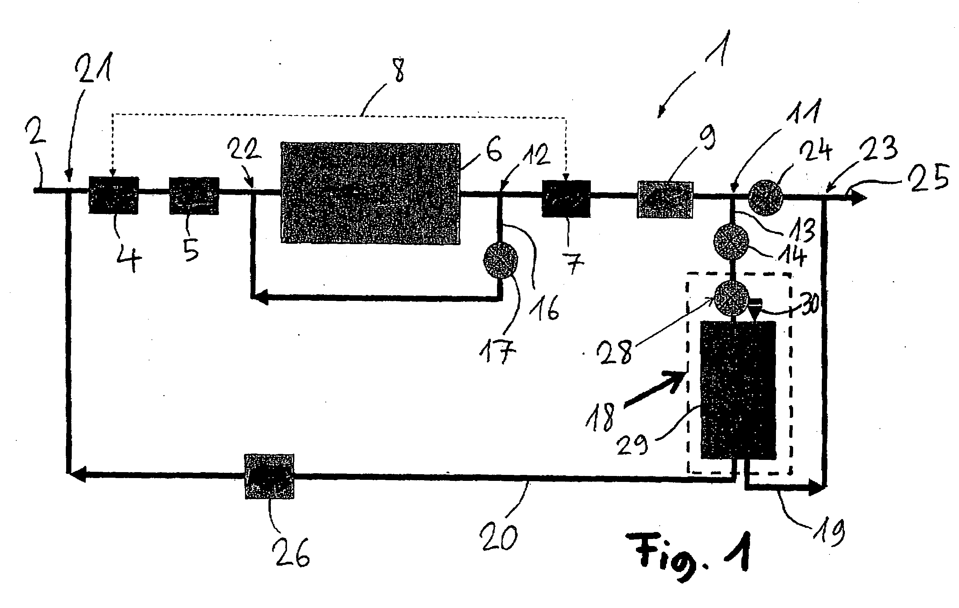

In Figur 1 ist ein Abgasrückführsystem 1 in Form eines vereinfachten Fluidschaltplans dargestellt. In dem Abgasrückführsystem 1 wird an einer Stelle 2 in bekannter Art und Weise ein Fluid, insbesondere Luft oder ein KraftstoffLuftgemisch, zugeführt. Das Fluid wird vorzugsweise über einen Verdichter oder Kompressor 4 und gegebenenfalls einen Ladeluftkühler 5 einer Brennkraftmaschine 6 zugeführt, die auch als Verbrennungsmotor bezeichnet wird. Der Brennkraftmaschine 6 ist eine Turbine 7 nachgeschaltet, die, wie durch einen gestrichelten Doppelpfeil 8 angedeutet ist, dazu dient, den Verdichter 4 anzutreiben. Der Turbine 7 ist zum Beispiel ein Dieselpartikeifilter 9 nachgeschaltet.

Die Leistung der Brennkraftmaschine 1 hängt vom Hubraum, von der Drehzahl und vom mittleren Fluiddruck, insbesondere Gasdruck, ab. Durch eine Aufladung der Brennkraftmaschine 6 kann die Füllung der Brennräume erheblich verbessert und damit die Motorleistung gesteigert werden. Das Fluid beziehungsweise Kraftstoffluftgemisch oder die Luft wird ganz oder teilweise außerhalb des Zylinders der Brennkraftmaschine vorverdichtet. Bei einem Motor mit Abgasturbolader treiben die Abgase die Turbine und diese den Verdichter an. Der Verdichter übernimmt das Ansaugen und liefert dem Motor eine vorverdichtete Frischgasladung. Der Ladeluftkühler 5 in der Ladeleitung führt die Verdichtungswärme an die Umgebungsluft ab. Dadurch wird die Zylinderfüllung weiter verbessert.

An einer ersten Entnahmestelle 11 und einer zweiten Entnahmestelle 12 wird von der Brennkraftmaschine abgegebenes Abgas abgezweigt. Das an der ersten Entnahmestelle 11 abgezweigte Abgas kann über eine erste Rückführleitung 13, in der ein erstes Abgasrückführventil 14 angeordnet ist, gekühlt zurückgeführt werden. Das an der zweiten Entnahmestelle 12 abgezweigte Abgas kann über eine zweite Rückführleitung 16, in der ein zweites Abgasrückführventil 17 angeordnet ist, ungekühlt zurückgeführt werden.

Zur Kühlung des an der ersten Entnahmestelle 11 abgezweigten Abgases ist dem ersten Abgasrückführventil 14 ein Wärmetauscher 18 nachgeschaltet. Das an der ersten Entnahmestelle 11 abgezweigte und in dem Wärmetauscher 18 gekühlte Abgas kann über eine Wärmetauscherrücktührleitung 20 und über eine erste Rückführstelle 21 wieder der Brennkraftmaschine 6 zugeführt werden. Das an der zweiten Entnahmestelle 12 abgezweigte Abgas kann über das zweite Abgasrückführventil 17 ungekühlt über eine zweite Rückführstelle 22 wieder der Brennkraftmaschine 6 zugeführt werden. Die erste Entnahmestelle 11 ist zwischen den Dieselpartikelfilter 9 und ein Gegendruckventil 24 geschaltet, das dazu dient, bei Bedarf einen Gegendruck an der ersten Entnahmestelle 11 aufzubauen. Die zweite Entnahmestelle 12 ist zwischen der Brennkraftmaschine 6 und der Turbine 7 angeordnet. Die erste Rückführstelle 21 ist zwischen der Stelle 2 und dem Verdichter 4 angeordnet. Die zweite Rückführstelle 22 ist zwischen dem Ladeluftkühler 5 und der Brennkraftmaschine 6 angeordnet. Eine dritte Rückführstelle 23 ist dem Gegendruckventil 24 nachgeschaltet. Durch einen Pfeil 25 ist angedeutet, dass das Abgas der Brennkraftmaschine 6 einer vorzugsweise schalldämpfenden Auspuffanlage zugeführt wird, die eine Katalysatoreinrichtung umfassen kann.

Die Abgasrückführung dient dazu, das Abgas möglichst weit abzukühlen. Das zurückgeführte Abgas nimmt an der Verbrennung in der Brennkraftmaschine nicht mehr teil, erwärmt sich aber. Insgesamt wird durch das rückgeführte Abgas die Temperatur in der Brennkraftmaschine beziehungsweise dem Motor abgesenkt. Durch niedrigere Temperaturen im Motor kann die Entstehung von Stickoxyden, die stark von der Temperatur im Motor abhängig sind, reduziert werden. In der Wärmetauscherrückführleitung 20 kann ein Filter 26 angeordnet sein.

Der Wärmetauscher 18 umfasst gemäß einem wesentlichen Aspekt der Erfindung ein Abzweigventil 28, das dem ersten Abgasrückführventil 14 nachgeschaltet ist. Das Abzweigventil 28 sorgt dafür, dass sowohl das an der ersten Entnahmestelle 11 abgezweigte und über die Wärmetauscherrückführleitung 20 zurückgeführte Abgas als auch das an der ersten Entnahmestelle 11 abgezweigte und über eine Wärmetauscherabzweigleitung 19 abgezweigte Abgas zunächst zwecks Wärmetausch durch einen Wärmetauscherblock 29 des Wärmetauschers 18 strömt, wie durch einen Pfeil 30 angedeutet ist.

Der Wärmetauscher 18 kann in zwei verschiedenen Modi betrieben werden. In einem Abgasrückführkühlmodus wird der Wärmetauscher 18 vorzugsweise als I-Flow-Wärmetauscher betrieben, um die Temperatur der Gasströmung des zurückgeführten Abgases zu reduzieren. In einem Wärmerückgewinnungsmodus wird die von dem zurückgeführten Abgas abgezweigte Gasströmung verwendet, um das durch den Wärmetauscher durchgeführte Kühlmittel zu erwärmen, insbesondere in einer Aufwärmphase der Brennkraftmaschine. Das erfindungsgemäße Abzweigventil 28 ermöglicht auf einfache Art und Weise die Darstellung der beiden Modi mit nur einem einzigen Wärmetauscher.

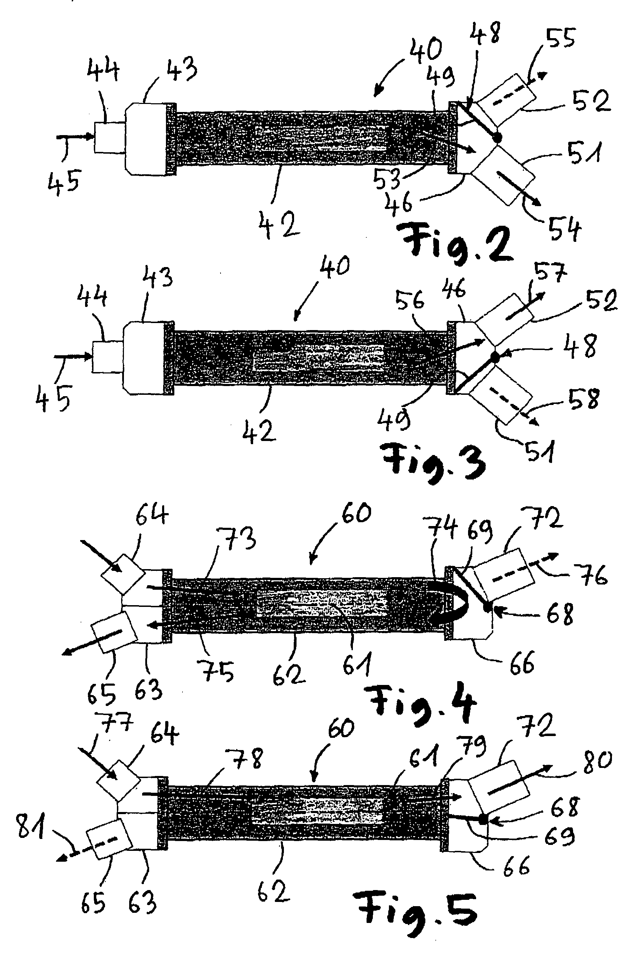

In den Figuren 2 und 3 ist dargestellt, dass der Wärmetauscher 18 aus Figur 1 als einfach durchströmter Wärmetauscher 40 ausgeführt sein kann, der auch als I-Flow-Wärmetauscher bezeichnet wird. Der Wärmetauscher 40 umfasst einen einfach durchströmten Wärmetauscherblock 42 mit einem Sammelkasten 43 an einem Ende. Der Sammelkasten 43 weist einen Eingangsstutzen 44 auf, durch den, wie durch einen Pfeil 45 angedeutet ist, an der Entnahmestelle 11 abgezweigtes Abgas in den Sammelkasten 43 eintritt. An dem anderen Ende des Wärmetauscherblocks 42 ist ein Sammelkasten 46 vorgesehen, in den ein Abzweigventil 48 mit einer Ventilklappe 49 integriert ist. Der Sammelkasten 46 weist zwei Ausgangsstutzen 51, 52 auf, durch welche die durch den Wärmetauscherblock 42 hindurch geführte Abgasströmung je nach Stellung der Ventilklappe 49 des Abzweigventils 48 austritt.

In Figur 2 versperrt die Ventilklappe 49 des Abzweigventils 48 den Ausgangsstutzen 52, so dass, wie durch Pfeile 53 und 54 angedeutet ist, der gesamte durch den Wärmetauscherblock 42 hindurch geführte Volumenstrom aus dem Ausgangsstutzen 51 austritt, an den vorzugsweise die Warmetauscherrückführleitung 20 angeschlossen ist. In dem in Figur 2 dargestellten Modus tritt kein Gas aus dem Ausgangsstutzen 52 aus, wie durch einen gestrichelten Pfeil 55 angedeutet ist. An den Ausgangsstutzen 52 ist vorzugsweise die Wärmetauscherabzweigleitung 19 angeschlossen. An den Eingangsstutzen 44 ist vorzugsweise die erste Rückführleitung 13 angeschlossen.

In Figur 3 befindet sich die Ventilklappe 49 des Abzweigventils 48 in ihrer zweiten Extremstellung, in der, wie durch Pfeile 56 und 57 angedeutet ist, die gesamte durch den Wärmetauscherblock 42 hindurch geführte Abgasströmung durch den Ausgangsstutzen 52 austritt. Durch einen gestrichelten Pfeil 58 ist angedeutet, dass in dieser Stellung der Ventilklappe 49 kein Abgas aus dem Ausgangsstutzen 51 austritt.

In den Figuren 4 und 5 ist ein Wärmetauscher 60 mit mindestens einer durch eine gestrichelte Linie 61 angedeuteten Trennwand vereinfacht dargestellt, die einen Wärmetauscherblock 62 so unterteilt, dass dieser U-förmig in entgegengesetzten Richtungen durchströmt werden kann. Der Wärmetauscher 60 umfasst an einem Ende des Wärmetauscherblocks 62 einen Sammelkasten 63 mit einem Eingangsstutzen 64 und einem Ausgangsstutzen 65, wie durch Pfeile angedeutet ist. An dem anderen Ende des Wärmetauscherblocks 62 ist ein Sammelkasten 66 vorgesehen, in den ein Abzweigventil 68 mit einer Ventilklappe 69 integriert ist. Der Sammelkasten 66 umfasst einen weiteren Ausgangsstutzen 72. durch den in Abhängigkeit von der Stellung der Ventilklappe 69 des Abzweigventils 68 Abgas austritt oder nicht.

In Figur 4 verschließt die Ventilklappe 69 des Abzweigventils 68 den weiteren Ausgangsstutzen 72, so dass, wie durch Pfeile 73, 74 und 75 angedeutet ist, der Wärmetauscherblock 62 U-förmig durchströmt wird. Durch den Ausgangsstutzen 72 tritt, wie durch einen gestrichelten Pfeil 76 angedeutet ist, kein Abgas aus.

An den Eingangsstutzen 64 ist vorzugsweise die erste Rückführleitung 13 angeschlossen. An den Ausgangsstutzen 65 ist die Wärmetauscherabzweigleitung 19 angeschlossen. An den weiteren Ausgangsstutzen 72 ist die Wärmetauscherrückführleitung 20 angeschlossen.

In Figur 5 befindet sich die Ventilklappe 69 des Abzweigventils 68 in einer Mittelstellung, in welcher die in Figur 4 angedeutete U-förmige Durchströmung des Wärmetauscherblocks 62 unterbrochen ist. Durch Pfeile 77, 78, 79 und 80 ist in Figur 5 angedeutet, dass die durch den Eingangsstutzen 64 eintretende Abgasströmung den Wärmetauscherblock 62 I-förmig einfach durchströmt und vollständig durch den Ausgangsstutzen 72 wieder austritt. Durch einen gestrichelten Pfeil 81 ist in Figur 5 angedeutet, dass in dieser Stellung der Ventilklappe 69 des Abzweigventils 68 kein Abgas durch den Ausgangsstutzen 65 austritt.
Selbstverständlich sind zusätzlich zu den in den Figuren 2 bis 5 dargestellten Extremstellungen der Ventilklappe 49; 69-des Abzweigventils 48; 68 zwischenstellungen möglich, in weichen jeweils nur ein Teil der durch die erste Rückführleitung 13 zugeführten Abgasströmung in die Wärmetauscherrückführleitung 20 beziehungsweise die Wärmetauscherabzweigleitung 19 gelangt.

## Patentansprüche

1. Abgasrückführsystem mit einer Brennkraftmaschine (6), der an einer Entnahmestelle (11) abgezweigtes und über eine Rückführstelle (21) zurückgeführtes Abgas zugeführt wird, mit einem zwischen der Entnahmestelle (11) und der Rückführstelle (21) angeordneten Wärmetauscher (18;40;60) für das zurückgeführte Abgas, und mit einem Abgasrückführventil (14), über das die zurückgeführte Abgasmenge regelbar ist, wobei das Abgasrückführventil (14) zwischen die Entnahmestelle (11) und den Wärmetauscher (18;40;60) geschaltet ist, **dadurch gekennzeichnet, dass** dem Wärmetauscher (18;40;60) ein Abzweigventil (28;48;68) zugeordnet ist, über welches das an der Entnahmestelle (11) abgezweigte und aus dem Wärmetauscher (18) austretende Abgas über die Rückführstelle (21) zurückgeführt oder über eine Abzweigleitung (19) abgeführt wird, wobei der Wärmetauscher (60) in entgegengesetzten Richtungen von dem an der Entnahmestelle abgezweigten Abgas durchströmbar beziehungsweise durchströmt ist.

2. Abgasrückführsystem nach Anspruch 1, **dadurch gekennzeichnet, dass** das an der Entnahmestelle (11) abgezweigte und aus dem Wärmetauscher (18) austretende Abgas durch das Abzweigventil (28;48;68) ganz oder teilweise über die Rückführstelle (21) zurückgeführt beziehungsweise über die Abzweigleitung (19) abgeführt wird.

3. Abgasrückführsystem nach Anspruch 1 oder 2, **dadurch gekennzeichnet, dass** das Abzweigventil (28;48;68) in den Wärmetauscher (18;40,60) integriert ist.

4. Abgasrückführsystem nach einem der Ansprüche 1 bis 3, **dadurch gekennzeichnet, dass** das Abzweigventil (48;68) an einem Ausgang des Wärmetauschers (40;60) vorgesehen ist.

5. Abgasrückführsystem nach einem der Ansprüche 1 bis 4, **dadurch gekennzeichnet, dass** der Wärmetauscher (40) nur in einer Richtung von dem an der Entnahmestelle (11) abgezweigten Abgas durchströmbar beziehungsweise durchströmt ist.

6. Abgasrückführsystem nach Anspruch 5, **dadurch gekennzeichnet, dass** die Abzweigleitung (19) und eine Rückführleitung (20) an ein Ende des Wärmetauschers (18;40;60) angeschlossen ist.

7. Abgasrückführsystem nach einem der Ansprüche 1 bis 6, **dadurch gekennzeichnet, dass** die Abzweigleitung (19) an ein Ende des Wärmetauschers angeschlossen ist, das mit der Entnahmestelle (11) für das Abgas in Verbindung steht.

8. Abgasrückführsystem nach Anspruch 7, **dadurch gekennzeichnet, dass** an das andere von zwei Enden des Wärmetauschers (60) eine Rückführleitung (20) angeschlossen ist.

9. Abgasrückführsystem nach einem der vorhergehenden Ansprüche, **dadurch gekennzeichnet, dass** der Entnahmestelle (11) ein Gegendruckventil (24) nachgeschaltet ist.

10. Abgasrücksystem nach einem der vorhergehenden Ansprüche, **dadurch gekennzeichnet, dass** zwischen der Brennkraftmaschine (6) und der Entnahmestelle (11) eine weitere Entnahmestelle (12) vorgesehen ist, die über ein weiteres Abgasrückführventil (17) mit einer weiteren Rückführstelle (22) verbindbar ist, die zwischen der Rückführstelle (21) und der Brennkraftmaschine (6) vorgesehen ist.

11. Abgasrückführsystem nach einem der vorhergehenden Ansprüche, **dadurch gekennzeichnet, dass** zwischen der Rückführstelle (21) und der Brennkraftmaschine (6) ein Verdichter (4) für das Abgas und/oder die Ladeluft vorgesehen ist, der durch eine Turbine (7) angetrieben ist, die zwischen der Brennkraftmaschine (6) und der Entnahmestelle (11) vorgesehen ist.

12. Abgasrückführsystem nach Anspruch 11, **dadurch gekennzeichnet, dass** ein Ladeluftkühler (5) zwischen den Verdichter (4) und die Brennkraftmaschine (6) geschaltet ist.

13. Abgasrückführsystem nach Anspruch 11 oder 12, **dadurch gekennzeichnet, dass** der Turbine (7) ein Dieselpartikefilter (9) nachgeschaltet ist.

## Claims

1. An exhaust gas recirculation system having an internal combustion engine (6), which is supplied with exhaust gas, diverted at a removal point (11) and returned via a return point (21), having a heat exchanger (18; 40; 60), arranged between the removal point (11) and the return point (21), for the returned exhaust gas, and having an exhaust gas recirculation valve (14), by means of which the amount of returned exhaust gas can be regulated, the exhaust gas recirculation valve (14) being connected between the removal point (11) and the heat exchanger (18; 40; 60), **characterized in that** the heat exchanger (18; 40, 60) is assigned a diverter valve (28; 48; 68), through which the exhaust gas, diverted at the removal point (11) and emerging from the heat exchanger (18), is returned via the return point (21) or removed via a branch line (19), the exhaust gas diverted at the removal point being able to flow or flowing through the heat exchanger (60) in opposite directions.

2. The exhaust gas recirculation system according to claim 1, **characterized in that** the exhaust gas, diverted at the removal point (11) and emerging from the heat exchanger (18), is returned by the diverter valve (28; 48; 68) totally or partially via the return point (21) or discharged via the branch line (19).

3. The exhaust gas recirculation system according to claim 1 or 2, **characterized in that** the diverter valve (28; 48; 68) is integrated into the heat exchanger (18; 40, 60).

4. The exhaust gas recirculation system according to any one of claims 1 through 3, **characterized in that** the diverter valve (48; 68) is provided at an outlet of the heat exchanger (40; 60).

5. The exhaust gas recirculation system according to any one of claims 1 through 4, **characterized in that** the exhaust gas, diverted at the removal point (11), can flow or flows through the heat exchanger (40) only in one direction.

6. The exhaust gas recirculation system according to claim 5, **characterized in that** the branch line (19) and a return line (20) are connected to one end of the heat exchanger (18; 40; 60).

7. The exhaust gas recirculation system according to any one of claims 1 through 6, **characterized in that** the branch line (19) is connected to one end of the heat exchanger, which is linked to the removal point (11) for the exhaust gas.

8. The exhaust gas recirculation system according to claim 7, **characterized in that** a return line (20) is connected to the other end of the two ends of the heat exchanger (60).

9. The exhaust gas recirculation system according to any one of the preceding claims, **characterized in that** a back pressure valve (24) is connected downstream of the removal point (11).

10. The exhaust gas recirculation system according to any one of the preceding claims, **characterized in that** another removal point (12), which can be connected via another exhaust gas recirculation valve (17) to another return point (22), which is provided between the return point (21) and the internal combustion engine (6), is provided between the internal combustion engine (6) and the removal point (11).

11. The exhaust gas recirculation system according to any one of the preceding claims, **characterized in that** between the return point (21) and the internal combustion engine (6) a compressor (4) for the exhaust gas and/or the charge air is provided, which is driven by a turbine (7), which is provided between the internal combustion engine (6) and the removal point (11).

12. The exhaust gas recirculation system according to claim 11, **characterized in that** a charge air cooler (5) is connected between the compressor (4) and the internal combustion engine (6).

13. The exhaust gas recirculation system according to claim 11 or 12, **characterized in that** a diesel particle filter (9) is connected downstream of the turbine (7).

## Revendications

1. Système de recyclage des gaz d'échappement avec un moteur à combustion interne (6) auquel sont fournis des gaz d'échappement déviés au niveau d'un point de prélèvement (11) et réintroduits via un point de recyclage (21), comprenant un échangeur de chaleur (18; 40; 60) prévu pour les gaz d'échappement réintroduits et disposé entre le point de prélèvement (11) et le point de recyclage (21), et comprenant une électrovanne de recyclage des gaz d'échappement (14) par laquelle peut être réglée la quantité de gaz d'échappement réintroduite, où l'électrovanne de recyclage des gaz d'échappement (14) est montée entre le point de prélèvement (11) et l'échangeur de chaleur (18; 40; 60), **caractérisé en ce qu'**une vanne de dérivation (28; 48; 68) est associée à l'échangeur de chaleur (18; 40; 60), vanne de dérivation par laquelle les gaz d'échappement déviés au niveau du point de prélèvement (11) et sortant de l'échangeur de chaleur (18) sont réintroduits via le point de recyclage (21) ou bien évacués via une conduite de dérivation (19), où l'échangeur de chaleur (60) peut être traversé ou est traversé, dans des directions de sens opposés, par les gaz d'échappement déviés au niveau du point de prélèvement.

2. Système de recyclage des gaz d'échappement selon la revendication 1, **caractérisé en ce que** les gaz d'échappement déviés au niveau du point de prélèvement (11) et sortant de l'échangeur de chaleur (18) sont, grâce à la vanne de dérivation (28; 48; 68), réintroduits en totalité ou en partie via le point de recyclage (21) ou bien évacués via la conduite de dérivation (19).

3. Système de recyclage des gaz d'échappement selon la revendication 1 ou 2, **caractérisé en ce que** la vanne de dérivation (28; 48; 68) est intégrée dans l'échangeur de chaleur (18; 40; 60).

4. Système de recyclage des gaz d'échappement selon l'une quelconque des revendications 1 à 3, **caractérisé en ce que** la vanne de dérivation (48; 68) est prévue au niveau d'une sortie de l'échangeur de chaleur (40; 60).

5. Système de recyclage des gaz d'échappement selon l'une quelconque des revendications 1 à 4, **caractérisé en ce que** l'échangeur de chaleur (40) peut être traversé ou est traversé seulement dans une direction, par les gaz d'échappement déviés au niveau du point de prélèvement (11).

6. Système de recyclage des gaz d'échappement selon la revendication 5, **caractérisé en ce que** la conduite de dérivation (19) et une conduite de recyclage (20) sont raccordées à une extrémité de l'échangeur de chaleur (18; 40; 60).

7. Système de recyclage des gaz d'échappement selon l'une quelconque des revendications 1 à 6, **caractérisé en ce que** la conduite de dérivation (19) est raccordée à une extrémité de l'échangeur de chaleur, extrémité qui communique avec le point de prélèvement (11) prévu pour les gaz d'échappement.

8. Système de recyclage des gaz d'échappement selon la revendication 7, **caractérisé en ce qu'**une conduite de recyclage (20) est raccordée au niveau de l'autre extrémité - au nombre de deux - de l'échangeur de chaleur (60).

9. Système de recyclage des gaz d'échappement selon l'une quelconque des revendications précédentes, **caractérisé en ce qu'**une vanne de contre-pression (24) est montée en aval du point de prélèvement (11).

10. Système de recyclage des gaz d'échappement selon l'une quelconque des revendications précédentes, **caractérisé en ce qu'**il est prévu, entre le moteur à combustion interne (6) et le point de prélèvement (11), un autre point de prélèvement (12) qui, grâce à une autre électrovanne de recyclage des gaz d'échappement (17), peut communiquer avec un autre point de recyclage (22) qui est prévu entre le point de recyclage (21) et le moteur à combustion interne (6).

11. Système de recyclage des gaz d'échappement selon l'une quelconque des revendications précédentes, **caractérisé en ce qu'**il est prévu, entre le point de recyclage (21) et le moteur à combustion interne (6), un compresseur (4) pour les gaz d'échappement et/ou pour l'air de suralimentation, compresseur qui est entraîné par une turbine (7) qui est prévue entre le moteur à combustion interne (6) et le point de prélèvement (11).

12. Système de recyclage des gaz d'échappement selon la revendication 11, **caractérisé en ce qu'**un refroidisseur d'air de suralimentation (5) est monté entre le compresseur (4) et le moteur à combustion interne (6).

13. Système de recyclage des gaz d'échappement selon la revendication 11 ou 12, **caractérisé en ce qu'**un filtre à particules diesel (9) est monté en aval de la turbine (7).
